# EUROPÄISCHE PATENTANMELDUNG

(11) **EP 4 309 560 A1**
(43) Veröffentlichungstag der Anmeldung: **24.01.2024**
(21) Anmeldenummer: 23184901.9
(22) Anmeldetag: 12.07.2023
(51) Int. Cl.: A47L 9/28, A47L 11/40

(54) **SELBSTFAHRENDES UND SELBSTLENKENDES BODENREINIGUNGSGERÄT, BODENREINIGUNGSSYSTEM UND VERFAHREN ZUM BETREIBEN EINES BODENREINIGUNGSGERÄTES**

(30) Priorität: 19.07.2022 DE 102022118094
(71) Anmelder: Alfred Kärcher SE & Co. KG, 71364 Winnenden (DE)
(72) Erfinder: Wenzel, Karl Engelbert, 71364 Winnenden (DE); Reeß, Christine, 71364 Winnenden (DE)
(74) Vertreter: DTS Patent- und Rechtsanwälte Schnekenbühl und Partner mbB

(57) **Zusammenfassung**

Die Erfindung betrifft ein selbstfahrendes und selbstlenkendes Bodenreinigungsgerät (10), umfassend ein Fahrwerk (16) zum Verfahren auf der Bodenfläche (12), mindestens ein Reinigungswerkzeug (22) zum Reinigen der Bodenfläche (12), eine Steuereinrichtung (20) und mindestens eine Sensoreinrichtung (24) mit einem auf die Bodenfläche (12) gerichteten Erfassungsbereich (41), wobei von der Steuereinrichtung (20) anhand eines Signals der mindestens einen Sensoreinrichtung (24) eine Verschmutzung (14) der Bodenfläche (12) und insbesondere auf der Bodenfläche (12) feststellbar ist, die Verschmutzung (14) anhand mindestens eines Kriteriums klassifizierbar ist und ein Reinigungsverhalten für die Bodenfläche (12) anhand der Klassifikation der mindestens einen Verschmutzung (14) überprüfbar und/oder anpassbar ist. Außerdem betrifft die Erfindung ein Bodenreinigungssystem (54) und ein Verfahren zum Betreiben eines Bodenreinigungsgerätes (10).

## Beschreibung

Die vorliegende Erfindung betrifft ein selbstfahrendes und selbstlenkendes Bodenreinigungsgerät.

Außerdem betrifft die vorliegende Erfindung ein Bodenreinigungssystem mit mindestens einem selbstfahrenden und selbstlenkenden Bodenreinigungsgerät.

Darüber hinaus betrifft die vorliegende Erfindung ein Verfahren zum Betreiben eines selbstfahrenden und selbstlenkenden Bodenreinigungsgerätes.

Selbstfahrende und selbstlenkende Bodenreinigungsgeräte ermöglichen die autonome Reinigung einer Bodenfläche. Zu diesem Zweck umfasst das Bodenreinigungsgerät insbesondere ein Fahrwerk zum Verfahren auf der Bodenfläche, mindestens ein Reinigungswerkzeug zum Reinigen der Bodenfläche und eine Steuereinrichtung zum Steuern des Betriebs.

Bekannt ist es, eine zu reinigende Bodenfläche vom Bodenreinigungsgerät auf ihre Beschaffenheit hin zu untersuchen. Beispielsweise wird das Material der Bodenfläche im Hinblick auf eine Reinigungsstrategie ermittelt, wobei zum Beispiel nicht überfahrbare Bereiche der Bodenfläche vom Bodenreinigungsgerät vermieden werden.

Die DE 10 2018 200 719 A1 beschreibt einen automatischen Bodenreiniger zum Reinigen eines Untergrunds. Ein Verfahren umfasst Merkmale des Aussendens von Licht eines vorbestimmten Lichtspektrums auf den Untergrund; des Erfassens von ausgesandtem Licht, nachdem es am Untergrund reflektiert wurde; des Bestimmens eines Intensitätsverlaufs des erfassten Lichts in einem vorbestimmten Lichtspektrum; und des Bestimmens einer Beschaffenheit des Untergrunds auf der Basis eines Vergleichs des Intensitätsverlaufs mit einem vorbestimmten Intensitätsverlauf.

In der WO 2018/202301 A1 ist beschrieben, wie mittels einer spektroskopischen Einrichtung eines Bodenreinigungsgerätes ein Bodentyp erkannt werden kann und darauf basierend Reinigungseigenschaften angepasst werden können.

Ausführungsformen von selbstfahrenden Bodenreinigungsgeräten sind in der EP 3 345 524 A1 und in der DE 10 2014 111 217 A1 beschrieben.

Die US 10,878,294 B2 beschreibt ein selbstfahrendes Bodenreinigungsgerät mit mindestens einer Kamera, mit der eine Umgebung oberhalb der Bodenfläche erfasst werden kann. Objekte der Umgebung können in einer Karte erkannt und hierauf basierend ein Reinigungsablauf angepasst werden.

Aufgabe der vorliegenden Erfindung ist es, ein selbstfahrendes Bodenreinigungsgerät, ein Bodenreinigungssystem und ein Verfahren zum Betreiben eines Bodenreinigungsgerätes bereitzustellen, mit dem eine bedarfsgerechte Reinigung der Bodenfläche durchführbar ist.

Diese Aufgabe wird durch ein erfindungsgemäßes selbstfahrendes und selbstlenkendes Bodenreinigungsgerät gelöst, umfassend ein Fahrwerk zum Verfahren auf der Bodenfläche, mindestens ein Reinigungswerkzeug zum Reinigen der Bodenfläche, eine Steuereinrichtung und mindestens eine Sensoreinrichtung mit einem auf die Bodenfläche gerichteten Erfassungsbereich, wobei von der Steuereinrichtung anhand eines Signals der mindestens einen Sensoreinrichtung eine Verschmutzung der Bodenfläche und insbesondere auf der Bodenfläche feststellbar ist, die Verschmutzung anhand mindestens eines Kriteriums klassifizierbar ist und ein Reinigungsverhalten für die Bodenfläche anhand der Klassifikation der mindestens einen Verschmutzung anpassbar ist.

Beim erfindungsgemäßen Bodenreinigungsgerät kann über die mindestens eine Sensoreinrichtung eine Verschmutzung der Bodenfläche festgestellt werden. Beispielsweise ist der Erfassungsbereich zu diesem Zweck bezogen auf eine Hauptbewegungsrichtung des Bodenreinigungsgerätes voraus auf einen Abschnitt der Bodenfläche gerichtet. Alternativ oder ergänzend kann der Erfassungsbereich auf einen unterhalb des Bodenreinigungsgerätes angeordneten Abschnitt gerichtet sein. Vorzugsweise ist der Erfassungsbereich bezogen auf eine Bewegungsrichtung dem mindestens einen Reinigungswerkzeug vorgelagert. Die Steuereinrichtung steht mit der mindestens einen Sensoreinrichtung in Wirkverbindung und ist ausgebildet und eingerichtet, die Verschmutzung zu klassifizieren und hierauf basierend eine Überprüfung und/oder eine Anpassung des Reinigungsverhaltens vorzunehmen. Die "Klassifikation" kann vorliegend insbesondere eine Quantifizierung der Verschmutzung umfassen. Das "Reinigungsverhalten" kann vorliegend beispielsweise breit ausgelegt werden, wobei durch Überprüfen und/oder Anpassen beispielsweise ein bestehender Reinigungsauftrag unverändert fortgesetzt oder zumindest teilweise geändert wird oder beispielsweise ein neuer Reinigungsauftrag erstellbar ist. Vorgesehen sein kann beispielsweise, hierauf wird nachfolgend noch eingegangen, eine Anpassung des Fahrverhaltens und/oder eine Anpassung betreffend den Einsatz mindestens eines Reinigungswerkzeugs.

Bei der vorliegenden Erfindung kann eine bedarfsgerechte Bodenbearbeitung abhängig von der erfassten und klassifizierten Verschmutzung vorgenommen werden. Hierbei kann insbesondere nicht-einschränkend für die vorliegende Erfindung davon ausgegangen werden, dass die Bodenfläche selbst vom Bodenreinigungsgerät grundsätzlich überfahrbar und für die Reinigung geeignet ist, so dass einem Reinigungsauftrag die Beschaffenheit des Bodens (beispielsweise aufgrund des Bodenmaterials) nicht grundsätzlich entgegensteht.

Vorgesehen sein kann, dass auf der Basis eines Signals der Sensoreinrichtung des Bodenreinigungsgerätes der Bodentyp anhand des Bodenmaterials und/oder anhand einer optischen Erscheinung des Bodens (beispielsweise regelmäßige Abschnitte durch Fliesen o.ä.) ermittelbar ist. Dies erlaubt es dem Bodenreinigungsgerät festzustellen, ob und vorzugsweise wie der Boden bestmöglich gereinigt werden kann, wobei vorzugsweise eine Anpassung des Reinigungsverhaltens an den Bodentyp möglich ist. Bereiche der Bodenfläche mit für die Reinigung nicht-erlaubten Bodentypen können bevorzugt vermieden oder umfahren werden. Für die Erläuterung der Erfindung wird vorliegend, wenn nicht anders erwähnt, davon ausgegangen, dass die Bodenfläche überfahrbar ist.

Das Kriterium für die Klassifikation kann bei der vorliegenden Erfindung beispielsweise eine Größe der Verschmutzung umfassen, wobei die Größe vorliegend insbesondere auch die Gestalt und/oder die Form, beispielsweise ermittelt anhand einer Hüllkontur, der Verschmutzung umfassen kann. Beispielsweise kann eine Anpassung des Reinigungsverhaltens erforderlich sein, falls die Verschmutzung aufgrund ihrer Größe vom Bodenreinigungsgerät nicht überfahrbar und/oder mit dem Reinigungswerkzeug nicht erfassbar ist.

Das Kriterium kann beispielsweise einen Grad der Verschmutzung der Bodenfläche umfassen.

Das Kriterium kann zum Beispiel eine Art der Verschmutzung umfassen. Hierbei ist insbesondere vorteilhaft, wenn zumindest ein Material der Verschmutzung ermittelbar ist. Vorzugsweise können zwei oder mehr Materialien ermittelt werden. Denkbar ist zum Beispiel die Ermittlung einer chemischen Gruppe. Das mindestens eine Material kann beispielsweise organisches oder alternativ nicht-organisches Material sein, wobei eine jeweilige weitergehende Unterscheidung möglich ist.

Das Kriterium kann zum Beispiel eine Position der Verschmutzung umfassen.

Das Kriterium kann zum Beispiel einen Aggregatzustand der Verschmutzung umfassen, insbesondere kann zum Beispiel eine feste Verschmutzung von einer flüssigen Verschmutzung unterschieden werden.

Denkbar ist beispielsweise eine Unterscheidung der Verschmutzung - beispielsweise materialspezifisch, nach einer reinigungsspezifischen chemischen Zusammensetzung, Art der Gestalt und/oder des Aggregatzustandes - anhand von mindestens einem der Folgenden: flüssige Verschmutzungen (wässrig oder ölig...), pastöse Verschmutzungen (fetthaltig, zuckerhaltig, stärkehaltig...), proteinhaltige Verschmutzungen, trockene Verschmutzungen. Obige Auflistung ist beispielhaft und nicht-beschränkend.

Die der Steuereinrichtung übertragenen Aufgaben werden beispielsweise mittels eines Anwendungsprogramms durchgeführt, das von der Steuereinrichtung ausgeführt wird oder ausführbar ist.

Das Anwendungsprogramm kann in einer Speichereinrichtung des Bodenreinigungsgerätes gespeichert sein, die mit der Steuereinrichtung in Wirkverbindung steht oder von dieser umfasst oder in diese integriert ist. In der Speichereinrichtung kann zum Beispiel ein bestehender Reinigungsauftrag gespeichert sein. Alternativ oder ergänzend kann in der Speichereinrichtung zum Beispiel eine Karte der Umgebung des Bodenreinigungsgerätes gespeichert sein, worauf nachfolgend noch eingegangen wird.

Vorteilhaft kann es sein, wenn die Anpassung des Reinigungsverhaltens durch die Steuereinrichtung eine Anpassung eines Fahrverhaltens des Bodenreinigungsgerätes, eine Anpassung des Einsatzes mindestens eines Reinigungswerkzeugs und/oder die Anpassung mindestens eines Reinigungsparameters umfasst. Beispielhafte anpassbare Parameter sind eine Menge an Reinigungsflüssigkeit wie beispielsweise Wasser, eine Konzentration oder Dosierung einer Reinigungschemikalie oder eine Drehzahl eines Reinigungswerkzeugs (zum Beispiel einer Bürste).

Günstig kann es sein, wenn die Anpassung des Reinigungsverhaltens durch die Steuereinrichtung in Abhängigkeit des mindestens einen Reinigungswerkzeugs durchführbar ist. Beispielsweise kann die Steuereinrichtung eine Information dahingehend umfassen, welches mindestens eine Reinigungswerkzeug das Bodenreinigungsgerät mit sich führt. Basierend auf dieser Information kann zum Beispiel entschieden werden, ob das Reinigungswerkzeug zum Entfernen der Verschmutzung überhaupt geeignet ist. Bejahendenfalls kann eine Reinigung unter Entfernen der Verschmutzung vorgenommen werden. Anderenfalls kann zum Beispiel eine Reinigung der Bodenfläche mit dem Ziel, die Verschmutzung zu entfernen, unterbleiben.

Obige vorteilhafte Ausführungsformen ermöglichen insbesondere eine reinigungswerkzeuggebundene Bearbeitung der Bodenfläche unter Berücksichtigung der mitgeführten Reinigungstechnik, die über das mindestens eine Reinigungswerkzeug zur Verfügung gestellt wird. Vorzugsweise kann die Reinigungstechnik erweiterbar sein, zum Beispiel durch Austausch eines Reinigungswerkzeuges und/oder Aufnahme eines weiteren Reinigungswerkzeugs durch das Bodenreinigungsgerät.

Die mindestens eine Sensoreinrichtung kann auf verschiedenartige Weise ausgestaltet sein. Denkbar ist ferner, dass mehr als eine Sensoreinrichtung vorhanden ist.

Die mindestens eine Sensoreinrichtung kann insbesondere optisch ausgestaltet sein, wobei Licht des sichtbaren Spektrums, im Infrarotbereich und/oder im UV-Bereich zum Einsatz kommen kann.

Vorteilhaft kann zum Beispiel der Einsatz von Licht in den Absorptionsbanden von Wasser sein, wodurch zum Beispiel Wasser auf der Bodenfläche detektiert werden kann, etwa bei wässrigen oder wasserhaltigen Verschmutzungen oder bei Restfeuchte nach der Reinigung.

Die mindestens eine Sensoreinrichtung kann zum Beispiel einen digitalen Detektor umfassen, zum Beispiel einen Zeilendetektor oder einen Felddetektor mit in Zeilenanordnung bzw. Feldanordnung (Array) angeordneten Pixeln.

Die mindestens eine Sensoreinrichtung kann beispielsweise eine Leuchteinheit zum Beleuchten der Bodenfläche umfassen. Die Beleuchtung kann schmalbandig, breitbandig, mit Bandsperre oder mit Bandpass ausgebildet sein. Die Beleuchtung kann diffus, gerichtet, kollimiert oder fokussiert sein.

Die mindestens eine Sensoreinrichtung ist oder umfasst zum Beispiel eine optische spektroskopische Einrichtung. Beispielsweise wird Licht, das von der Bodenfläche gestreut oder reflektiert wird, in seine spektralen Bestandteile zerlegt. Denkbar ist zum Beispiel ein diffraktives und/oder ein refraktives Element zur spektralen Zerlegung des Lichts. Anhand der jeweiligen spektralen Bestandteile kann die Steuereinrichtung entscheiden, welcher Art die Verschmutzung ist, wobei vorzugsweise ein Material ermittelt wird. Bei der Entscheidung werden beispielsweise relative und/oder absolute Intensitäten einzelner spektraler Bestandteile für die Auswertung herangezogen.

Die mindestens eine Sensoreinrichtung kann zum Beispiel eine Kameraeinrichtung mit mindestens einer Kamera sein oder umfassen. Denkbar ist auch der Einsatz einer 2D-Kameraeinrichtung mit Kameras in Stereoanordnung zum Bereitstellen einer Tiefeninformation.

Vorgesehen sein kann, dass eine Sensoreinrichtung vorhanden ist, die eine räumliche Umgebungsinformation bereitstellt im Hinblick auf eine Relativposition der Verschmutzung und des Bodenreinigungsgerätes, und eine Sensoreinrichtung (beispielsweise eine spektroskopische Einrichtung) zum Bereitstellen einer Information, die indikativ für ein Material der Verschmutzung ist.

Bevorzugt ist eine Kameraeinrichtung mit mindestens einer Kamera sowie zusätzlich eine optische spektroskopische Einrichtung vorhanden.

Die mindestens eine Sensoreinrichtung kann zum Beispiel eine Abstandsmesseinrichtung sein oder umfassen, wobei zum Beispiel eine TOF-Kamera vorgesehen ist (TOF, Time-Of-Flight). Über die Abstandsmesseinrichtung kann vorzugsweise die Gestalt einer Verschmutzung erfasst werden.

Die mindestens eine Sensoreinrichtung kann zum Beispiel eine Einrichtung zum räumlichen Abtasten der Bodenfläche und/oder der Umgebung des Bodenreinigungsgerätes sein oder umfassen, beispielsweise umfassend einen Lidar-Sensor. Der Lidar-Sensor kommt vorzugsweise mit einer optischen spektroskopischen Einrichtung zum Einsatz. Diese könnte entfallen, wenn anhand der Daten des Lidar-Sensors die Position der Verschmutzung und deren Material ermittelt werden können.

Die mindestens eine Sensoreinrichtung kann zum Beispiel eine Radareinrichtung sein oder umfassen, beispielsweise ein mm-Wave Radar.

Die mindestens eine Sensoreinrichtung kann zum Beispiel ein induktiv wirksames Sensorelement mit elektromagnetischem Messprinzip sein oder umfassen, beispielsweise als Materialsensor.

In einer Speichereinrichtung des Bodenreinigungsgerätes sind vorzugsweise Referenzinformationen gespeichert, anhand derer die Verschmutzung klassifizierbar ist.

Günstig kann es sein, wenn zwei voneinander unterschiedliche Sensoreinrichtungen vorgesehen sind, deren Signale bei der Feststellung der Verschmutzung und/oder bei der Klassifikation der Verschmutzung von der Steuereinrichtung herangezogen werden. Die Sensoreinrichtungen können einander ergänzende Informationen liefern, um eine zuverlässigere Feststellung und/oder Klassifikation der Verschmutzung zu ermöglichen.

Das Bodenreinigungsgerät kann bei einer bevorzugten Ausführungsform eine Lokalisierungseinrichtung zum Lokalisieren in einer Umgebung umfassen, wobei in einer Speichereinrichtung eine Karte der Umgebung gespeichert ist, wobei die Verschmutzung mit Positionsinformation in der Karte speicherbar ist und/oder in der Karte eine zuvor erfasste Verschmutzung mit Positionsinformation gespeichert ist. Unter Einsatz der Lokalisierungseinrichtung kann das Bodenreinigungsgerät seine Position in der Umgebung unter Nutzung der Karte ermitteln. In der Karte kann, beispielsweise aufgrund einer früheren Erfassung, bereits eine Verschmutzung gespeichert sein. Beispielsweise ist die Verschmutzung verknüpft mit einem Reinigungsauftrag gespeichert, gemäß dem die Verschmutzung zu entfernen ist. Eine neu erfasste Verschmutzung kann in der Karte gespeichert werden.

Ein Eintrag der Verschmutzung ist vorzugsweise aus der Karte entfernbar, wenn die Verschmutzung an der in der Karte gespeicherten Position nicht erfassbar ist. Stellt die Steuereinrichtung zum Beispiel fest, dass an der durch die Positionsinformation definierten Position seiner Umgebung keine Verschmutzung vorhanden ist, wird diese vorzugsweise aus der Karte entfernt und die Karte auf diese Weise aktualisiert.

Günstig ist es, wenn die Verschmutzung vor der Reinigung mit dem Bodenreinigungsgerät erfassbar ist, insbesondere vor Überfahren der Verschmutzung mit dem Bodenreinigungsgerät, und dass die Überprüfung und/oder die Anpassung des Reinigungsverhaltens vor der Reinigung durchführbar ist. Dadurch kann beispielsweise gewährleistet werden, dass keine unpassende Reinigung der Bodenfläche zum Entfernen der Verschmutzung vorgenommen wird und/oder eine bestmögliche Anpassung des Reinigungsverhaltens erfolgt.

Vorteilhafterweise ist die Bodenfläche nach vorhergehender Erfassung der Verschmutzung und nach der Reinigung auf Entfernung der Verschmutzung überprüfbar. Auf diese Weise kann festgestellt werden, ob das Reinigungsergebnis zufriedenstellend ist, insbesondere ob die Verschmutzung hinreichend entfernt wurde.

Bei negativer Überprüfung, wenn die Verschmutzung nicht oder nicht hinreichend entfernt wurde, ist vorzugsweise mindestens eine erneute Reinigung der Bodenfläche zum Entfernen der Verschmutzung durchführbar. Die erneute Reinigung kann sich auf einen die Verschmutzung aufweisenden Abschnitt der Bodenfläche beschränken, um die Zeitdauer für die erneute Reinigung gering zu halten.

Günstig kann es sein, wenn bei erneuter Reinigung mindestens ein Reinigungswerkzeug im Hinblick auf eine Steigerung der Reinigungsleistung ansteuerbar ist, um sicherzustellen, dass die Verschmutzung entfernt werden kann.

Denkbar ist alternativ oder ergänzend eine Veränderung mindestens eines Reinigungsparameters, um die Verschmutzung zu entfernen. Zum Beispiel wird eine Menge an Reinigungsflüssigkeit, eine Konzentration oder Dosierung einer Reinigungschemikalie und/oder eine Drehzahl eines Reinigungswerkzeugs angepasst.

Alternativ oder ergänzend kann bei der erneuten Reinigung beispielsweise ein andersartiges Reinigungswerkzeug des Bodenreinigungsgerätes eingesetzt werden.

Nach einer vorgegebenen Anzahl erfolgloser Versuche, die Verschmutzung zu entfernen, ist die Verschmutzung vom Bodenreinigungsgerät, insbesondere der Steuereinrichtung, vorzugsweise als nicht von der Bodenfläche entfernbar klassifizierbar. Abhängig von dieser Klassifikation können beispielsweise weitere Maßnahmen vorgesehen sein oder eingeleitet werden, mit der nicht entfernbaren Verschmutzung umzugehen.

Eine nicht-entfernbare Verschmutzung kann beispielsweise festsitzender Kaugummi oder eine Verfärbung sein, zum Beispiel durch Abrieb.

Beispielsweise kann vorgesehen sein, dass vom Bodenreinigungsgerät eine diesbezügliche Mitteilung über eine Kommunikationseinrichtung an ein weiteres autonomes Bodenreinigungsgerät übermittelt wird, welches insbesondere ein andersartiges Reinigungswerkzeug umfasst, mit dem die Verschmutzung entfernbar ist. Das Bodenreinigungsgerät kann zum Beispiel den Ort der Verschmutzung aufsuchen und diese zu entfernen versuchen.

Vorgesehen sein kann beispielsweise, dass eine diesbezügliche Mitteilung vom Bodenreinigungsgerät über eine Kommunikationseinrichtung an eine räumlich entfernt angeordnete Datenverarbeitungseinrichtung eines Benutzers übermittelt wird. Die Datenverarbeitungseinrichtung, zum Beispiel ein mobiles Endgerät, ein Server, ein Rechnernetzwerk (Ausgestaltung z.B. als Cloud) kann Empfänger der Mitteilung an den Benutzer sein. Der Benutzer kann zum Beispiel Maßnahmen mit dem Ziel der Entfernung der Verschmutzung einleiten.

Vorgesehen sein kann, dass die Verschmutzung in der Karte als nicht entfernbar speicherbar ist, verbunden mit einer Positionsinformation. Anhand des Eintrags in der Karte kann die Verschmutzung zum Beispiel zu einem späteren Zeitpunkt mit dem Ziel aufgesucht werden, diese zu entfernen.

Als günstig kann es sich erweisen, wenn von der Steuereinrichtung anhand der Klassifikation feststellbar ist, ob die Verschmutzung mit dem mindestens einen Reinigungswerkzeug reinigbar ist. Bei negativer Feststellung kann beispielsweise von Anfang an ein Versuch unterbleiben, die Verschmutzung durch Reinigung zu entfernen, und/oder die Verschmutzung wird nicht vom Bodenreinigungsgerät überfahren, weil das Reinigungswerkzeug ungeeignet ist. Von der Steuereinrichtung kann insbesondere feststellbar sein, unter Einsatz was für einer Art Reinigungswerkzeug die Verschmutzung reinigbar ist.

Von der Steuereinrichtung kann die Verschmutzung bei einer bevorzugten Ausführungsform der Erfindung als nicht reinigbar angesehen werden, wenn die Verschmutzung von der Steuereinrichtung basierend auf der Klassifikation als nicht überfahrbar angesehen wird. Beispielsweise kann abhängig von dem der Klassifikation zugrundeliegenden Kriterium die Verschmutzung nicht überfahrbar sein, weil sie zu groß ist, eine unpassende Gestalt aufweist und/oder eine Beschaffenheit aufweist, die beim Überfahren zu einer Verbreitung (z. B. Kot, Flüssigkeit) oder zu einer Verhärtung (Festfahren) auf der Bodenfläche führen könnte.

Bei einer Feststellung, dass die Verschmutzung nicht reinigbar ist oder nach dem Gesagten als nicht reinigbar angesehen wird, können günstigerweise weitere Schritte unternommen und/oder Gegenmaßnahmen eingeleitet werden.

Beispielsweise kann eine diesbezügliche Mitteilung vom Bodenreinigungsgerät über eine Kommunikationseinrichtung an ein weiteres autonomes Bodenreinigungsgerät übermittelt werden, das insbesondere ein andersartiges Reinigungswerkzeug umfasst, mit dem die Verschmutzung entfernbar ist. Hierauf wurde bereits eingegangen. Das weitere Bodenreinigungsgerät kann die Verschmutzung vorzugsweise aufsuchen und diese wenn möglich entfernen.

Die Verschmutzung kann beispielsweise in der Karte gespeichert werden, verbunden mit einer Positionsinformation. Günstigerweise ist die Speicherung verbunden mit einer Information über ein geeignetes Reinigungswerkzeug zum Entfernen der Verschmutzung. Zu einem späteren Zeitpunkt kann ein Bodenreinigungsgerät die Verschmutzung aufsuchen und wenn möglich entfernen.

Vorgesehen sein kann, dass eine diesbezügliche Mitteilung vom Bodenreinigungsgerät über eine Kommunikationseinrichtung an eine räumlich entfernt angeordnete Datenverarbeitungseinrichtung eines Benutzers übermittelt wird, wobei für die Datenverarbeitungseinrichtung das oben Erwähnte gelten kann. Der Benutzer kann eine Reinigung der Bodenfläche mit dem Ziel, die Verschmutzung zu entfernen, veranlassen.

Vorgesehen sein kann, dass an einer Anzeigeeinrichtung, beispielsweise des Bodenreinigungsgerätes, ein Hinweis an eine Bedienperson zum Einsetzen eines geeigneten Reinigungswerkzeugs in das Bodenreinigungsgerät bereitgestellt wird. Beispielsweise wird ein Benutzer darüber informiert, dass die Verschmutzung mit einem andersartigen Reinigungswerkzeug möglicherweise entfernt werden könnte.

Vorgesehen sein kann, dass das Bodenreinigungsgerät zu einer Station, an der mindestens ein Reinigungswerkzeug vom Bodenreinigungsgerät austauschbar oder aufnehmbar ist, unter dessen Einsatz die Verschmutzung reinigbar und insbesondere entfernbar ist, bewegt wird, woraufhin die Bodenfläche mit der Verschmutzung vom Bodenreinigungsgerät gereinigt wird. Das autonome Bodenreinigungsgerät kann vorzugsweise selbsttätig das weitere Reinigungswerkzeug aufnehmen oder gegen ein vorhandenes Reinigungswerkzeug austauschen. Im Anschluss daran kann vorzugsweise die Verschmutzung entfernt werden.

Als vorteilhaft erweist es sich nach dem Gesagten, dass mindestens ein Reinigungswerkzeug vorzugsweise lösbar festlegbar am Bodenreinigungsgerät gehalten ist. Beispielsweise ist das Reinigungswerkzeug austauschbar am Bodenreinigungsgerät gehalten.

Das mindestens eine Reinigungwerkzeug kann zum Beispiel von einem Benutzer und/oder alternativ, etwa bei einem autonomen Bodenreinigungsgerät, von diesem selbst gelöst und vorzugsweise getauscht werden. Zwei oder mehr Reinigungswerkzeuge können vorgesehen und vom Benutzer und/oder automatisch getauscht werden. Zum Beispiel wird das nach dem Tausch vorhandene Reinigungswerkzeug eingesetzt, um eine nicht-entfernbare Verschmutzung zu entfernen. Die Position kann vom Bodenreinigungsgerät nach der Identifikation der Verschmutzung gespeichert und vom Bodenreinigungsgerät später wieder aufgesucht werden, wenn es mit einem passenden Reinigungswerkzeug ausgestattet ist.

Günstig kann es sein, wenn das Bodenreinigungsgerät zwei oder mehr voneinander unterschiedliche Reinigungswerkzeuge umfasst, die wahlweise zur Reinigung der Bodenfläche einsetzbar sind. Beispielsweise kann abhängig von der Verschmutzung vom Bodenreinigungsgerät dasjenige mitgeführte Reinigungswerkzeug bedarfsabhängig eingesetzt und zum Beaufschlagen der Bodenfläche verwendet werden, mit dem die Verschmutzung reinigbar ist, mit dem Ziel, diese zu entfernen. Den Reinigungswerkzeugen können Verstelleinheiten zugeordnet sein, über die sie in Eingriff oder außer Eingriff mit der Bodenfläche gebracht werden können.

Bei obigen Ausführungsformen kann das Bodenreinigungsgerät beispielsweise eine Kehreinheit und eine Wischeinheit umfassen. Eine flüssige Verschmutzung wird beispielsweise nicht gekehrt, sondern nur gewischt, wobei die Kehreinheit zum Beispiel angehoben werden kann und die Wischeinheit abgesenkt ist.

Vorgesehen sein kann, dass bei Erfassen der Verschmutzung, die in der Karte als nicht reinigbar oder als nicht entfernbar gespeichert ist, und/oder die verbunden mit einer Information über ein geeignetes Reinigungswerkzeug gespeichert ist, welches sich vom mindestens einen Reinigungswerkzeug des Bodenreinigungsgerätes unterscheidet, ein Versuch der Reinigung der Bodenfläche zum Entfernen der Verschmutzung unterbleibt. Ein unnötiger Aufwand zum Entfernen einer nicht reinigbaren oder nicht entfernbaren Verschmutzung kann auf diese Weise vermieden werden. Dieses Reinigungsverhalten kann selbst bei aufeinanderfolgenden Reinigungsaufträgen zum Reinigen der Bodenfläche ausgeführt werden.

Nicht-reinigbare und/oder nicht-entfernbare Verschmutzungen werden zum Beispiel ignoriert. Führt das Bodenreinigungsgerät zu einem Zeitpunkt ein geeignetes Reinigungswerkzeug mit, wird demgegenüber vorzugsweise ein Versuch unternommen, die Verschmutzung zu entfernen.

Die Überprüfung und/oder die Anpassung des Reinigungsverhaltens kann beispielsweise ein Umfahren der Verschmutzung und/oder ein Vermeiden des Überfahrens der Verschmutzung umfassen. Ein derartiges Verhalten kann sich zum Beispiel als vorteilhaft erweisen, um ein unerwünschtes Verteilen der Verschmutzung auf der Bodenfläche (z.B. Flüssigkeit, Kot) oder ein Festfahren der Verschmutzung zu vermeiden.

Die Überprüfung und/oder Anpassung des Reinigungsverhaltens kann alternativ oder ergänzend ein Überfahren und Reinigen der Verschmutzung führend mit einem vorgegebenen Reinigungswerkzeug umfassen, wobei das Bodenreinigungsgerät zwei oder mehr Reinigungswerkzeuge umfasst. Vorgesehen sein kann beispielsweise, dass sich ein Reinigungswerkzeug besonders zum Entfernen der Verschmutzung eignet, wohingegen ein weiteres Reinigungswerkzeug zu diesem Zweck beispielsweise ungeeignet ist. Denkbar ist zum Beispiel, dass dem Bodenreinigungsgerät bei einer flüssigen Verschmutzung keine Reinigung mit einer Kehreinheit möglich ist, wohl aber mit einer Wischeinheit des Bodenreinigungsgerätes. In diesem Fall kann das Fahrwerk zu Beispiel so angesteuert werden, dass die Verschmutzung führend mit der Wischeinheit überfahren wird.

Das mindestens eine Reinigungswerkzeug kann zum Beispiel eines der Folgenden umfassen: eine Kehreinheit, eine Kehr-Saug-Einheit, eine Wischeinheit, eine Scheuersaugeinheit und/oder eine Saugeinheit (ohne weitere Reinigungsfunktion).

Denkbar ist, dass das mindestens eine Reinigungswerkzeug für zumindest eines der Folgenden ausgebildet ist: Dampfreinigung, Hochdruckreinigung, Reinigung mit Strahl (Flüssigkeit und/oder Partikel), Trockenmoppen.

Mindestens eine Sensoreinrichtung ist günstigerweise an oder nahe einer Vorderseite des Bodenreinigungsgerätes angeordnet, bezogen auf dessen Hauptbewegungsrichtung.

Günstigerweise ist ein in Hauptbewegungsrichtung vor dem Bodenreinigungsgerät angeordneter Abschnitt der Bodenfläche und/oder ein unterhalb des Bodenreinigungsgerätes angeordneter Abschnitt der Bodenfläche mittels der mindestens einen Sensoreinrichtung erfassbar. Bevorzugt ist die Sensoreinrichtung derart positioniert, dass eine Verschmutzung vom Bodenreinigungsgerät unerwünschterweise nicht überfahren werden kann.

Eine spektroskopische Einrichtung ist beispielsweise auf einen unterhalb des Bodenreinigungsgerätes angeordneten Abschnitt der Bodenfläche gerichtet.

Mindestens eine Sensoreinrichtung kann beispielsweise an oder nahe einem Absturzsensor des Bodenreinigungsgerätes angeordnet sein.

Mindestens eine Sensoreinrichtung kann zum Beispiel außermittig zu einer Seite des Bodenreinigungsgerätes versetzt positioniert sein. Dies kann sich zum Beispiel bei Konturfahrten wie etwa einer Wandverfolgungsfahrt als vorteilhaft erweisen.

Mindestens eine Sensoreinrichtung kann beispielsweise an oder nahe einer Rückseite des Bodenreinigungsgerätes angeordnet sein, bezogen auf dessen Hauptbewegungsrichtung. Dies erlaubt es auf einfache Weise, dass mittels der Sensoreinrichtung nach dem Reinigen überprüft wird, ob die Verschmutzung entfernt wurde. Ist dies nicht oder nicht vollständig der Fall, kann beispielsweise wie vorstehend beschrieben vorgegangen werden.

Alternativ oder ergänzend könnte vorgesehen sein, dass das Bodenreinigungsgerät nach dem Reinigen wendet und mittels einer an oder nahe der Vorderseite angeordneten Sensoreinrichtung überprüft, ob die Verschmutzung entfernt wurde, so dass erforderlichenfalls eine nochmalige Reinigung ausgeführt wird.

Wie bereits erwähnt, betrifft die vorliegende Erfindung auch ein Bodenreinigungssystem.

Ein erfindungsgemäßes, die eingangs genannte Aufgabe lösendes Bodenreinigungssystem umfasst mindestens ein Bodenreinigungsgerät der vorstehend beschriebenen Art, eine Station für das Bodenreinigungsgerät und zwei oder mehr verschiedenartige Reinigungswerkzeuge, von denen zumindest eines am Bodenreinigungsgerät lösbar festlegbar ist, und wobei das Reinigungswerkzeug vom Bodenreinigungsgerät an der Station selbsttätig aufnehmbar ist, abhängig von einer Klassifikation der Verschmutzung.

Beim erfindungsgemäßen Bodenreinigungssystem kann ein Reinigungswerkzeug selbsttätig vom Bodenreinigungsgerät aufgenommen werden. Beispielsweise wird ein zusätzliches Reinigungswerkzeug aufgenommen oder ein vorhandenes Reinigungswerkzeug ersetzt. Es besteht die Möglichkeit, dass das Bodenreinigungsgerät die Station aufsucht, um das geeignete Reinigungswerkzeug zum Entfernen der Verschmutzung aufzunehmen und sich anschließend zur Verschmutzung begibt, um diese zu entfernen, sollte ein Entfernen der Verschmutzung mit dem zuvor vorhandenen Reinigungswerkzeug nicht möglich sein.

Wie bereits erwähnt kann vorgesehen sein, dass das Bodenreinigungsgerät zwei oder mehr voneinander unterschiedliche Reinigungswerkzeuge umfasst, die wahlweise zur Reinigung der Bodenfläche einsetzbar sind, abhängig von der Verschmutzung.

Ein andersartiges erfindungsgemäßes, die eingangs genannte Aufgabe lösendes Bodenreinigungssystem umfasst ein Bodenreinigungssystem der vorstehend beschriebenen Art und/oder ein selbstfahrendes und selbstlenkendes Untersuchungsgerät, umfassend ein Fahrwerk zum Verfahren auf der Bodenfläche, eine Steuereinrichtung, eine Kommunikationseinrichtung und mindestens eine Sensoreinrichtung mit einem auf die Bodenfläche gerichteten Erfassungsbereich, wobei von der Steuereinrichtung anhand eines Signals der mindestens einen Sensoreinrichtung eine Verschmutzung der Bodenfläche und insbesondere auf der Bodenfläche feststellbar ist und die Verschmutzung anhand mindestens eines Kriteriums klassifizierbar ist, wobei das Bodenreinigungssystem mindestens ein weiteres selbstfahrendes und selbstlenkendes Bodenreinigungsgerät umfasst, umfassend ein Fahrwerk zum Verfahren auf der Bodenfläche, mindestens ein Reinigungswerkzeug zum Reinigen der Bodenfläche, eine Steuereinrichtung, und eine Kommunikationseinrichtung, wobei vom Untersuchungsgerät mindestens einem weiteren Bodenreinigungsgerät über die Kommunikationseinrichtungen direkt oder indirekt ein Reinigungsauftrag mit einer Verschmutzungsinformation über die klassifizierte Verschmutzung übermittelbar ist.

Bei diesem erfindungsgemäßen Bodenreinigungssystem kann, wie im Zusammenhang mit der Erläuterung des erfindungsgemäßen Bodenreinigungsgerätes erwähnt, die Verschmutzung klassifiziert werden. Ein diesbezüglicher Reinigungsauftrag kann einem Bodenreinigungsgerät des Bodenreinigungssystems übermittelt werden. Das Bodenreinigungsgerät kann optional mittels der Steuereinrichtung ein Reinigungsverhalten für die Bodenfläche anhand der Klassifikation der mindestens einen Verschmutzung überprüfen oder anpassen. Insbesondere kann die Verschmutzung mit dem Ziel aufgesucht werden, diese zu entfernen.

Das Bodenreinigungsgerät kann von dem Untersuchungsgerät, das selbst ein Bodenreinigungsgerät sein kann, zum Entfernen der Verschmutzung gerufen werden, beispielsweise wenn das Bodenreinigungsgerät ein zum Entfernen der Verschmutzung geeignetes Reinigungswerkzeug mit sich führt.

Die Übermittlung des Reinigungsauftrags kann direkt erfolgen, unmittelbar vom Untersuchungsgerät zum Bodenreinigungsgerät. Alternativ oder ergänzend kann eine Übermittlung über eine Datenverarbeitungseinrichtung erfolgen. Hierbei kann es sich zum Beispiel um einen Server oder um ein Rechnernetzwerk handeln, das beispielsweise im Besitz oder unter Verwaltung eines Herstellers des Bodenreinigungssystems ist.

Das Untersuchungsgerät und/oder das mindestens eine weitere Bodenreinigungsgerät kann insbesondere ein Bodenreinigungsgerät der vorstehend beschriebenen Art sein.

Wie bereits erwähnt, betrifft die vorliegende Erfindung auch ein Verfahren.

Ein erfindungsgemäßes, die eingangs genannte Aufgabe lösendes Verfahren zum Betreiben eines Bodenreinigungsgerätes, insbesondere der vorstehend beschriebenen Art, umfasst das Erfassen, mittels mindestens einer Sensoreinrichtung, einer Verschmutzung der Bodenfläche, das Klassifizieren, mittels einer Steuereinrichtung, der Verschmutzung, und das Überprüfen und/oder Anpassen, mittels der Steuereinrichtung, eines Reinigungsverhaltens für die Bodenfläche anhand der Klassifikation der mindestens einer Verschmutzung.

Die Vorteile, die im Zusammenhang mit der Erläuterung des erfindungsgemäßen Bodenreinigungsgerätes erzielt wurden, können bei den erfindungsgemä-ßen Bodenreinigungssystemen und beim erfindungsgemäßen Verfahren ebenfalls erzielt werden. Auf obige Ausführungen wird verwiesen.

Vorteilhafte Ausführungsformen der erfindungsgemäßen Bodenreinigungssysteme und vorteilhafte Ausführungsbeispiele des erfindungsgemäßen Verfahrens ergeben sich durch vorteilhafte Ausführungsformen des erfindungsgemä-ßen Bodenreinigungsgerätes. Zur Vermeidung von Wiederholungen wird auf obige Ausführungen verwiesen.

Ein bevorzugtes Ausführungsbeispiel des erfindungsgemäßen Verfahrens wird an dieser Stelle umrissen und nachfolgend ausführlich erläutert.

Nach Erkennen einer Verschmutzung durch das Bodenreinigungsgerät kann zunächst festgestellt werden, ob die Verschmutzung dem Grunde nach reinigbar ist. Hierbei kann zum Beispiel anhand der Größe festgestellt werden, ob die Verschmutzung zu groß für die Reinigung ist. Bejahendenfalls wird die Verschmutzung umfahren und kann in einer Karte als nicht-reinigbar aufgrund der Größe gekennzeichnet werden. Ein Benutzer kann hierüber informiert werden.

Bei nicht zu großer Verschmutzung wird geprüft, ob diese mit dem oder einem mitgeführten Reinigungswerkzeug gereinigt werden kann. Bejahendenfalls wird die Bodenfläche mit dem Ziel gereinigt, die Verschmutzung zu entfernen, falls erforderlich mehrfach. Kann die Verschmutzung entfernt werden, ist die Reinigung (zumindest an diesem Bodenflächenabschnitt) abgeschlossen. Anderenfalls kann die Verschmutzung in der Karte als nicht entfernbar gekennzeichnet und zum Beispiel ein Benutzer informiert werden.

Ist das Reinigungswerkzeug ungeeignet, kann ein anderes Reinigungswerkzeug vom Bodenreinigungsgerät eingesetzt und eine Reinigung wie zuletzt erläutert durchgeführt werden.

Fehlt es an einem weiteren Reinigungswerkzeug, kann die Verschmutzung in der Karte als nicht reinigbar aufgrund der ermittelten Schmutzart gekennzeichnet und optional ein Benutzer hierüber informiert werden.

Die nachfolgende Beschreibung bevorzugter Ausführungsformen der Erfindung dient im Zusammenhang mit der Zeichnung der näheren Erläuterung der Erfindung. Mit dem nachfolgend beschriebenen Bodenreinigungsgerät und den Bodenreinigungssystemen kann das erfindungsgemäße Verfahren ausgeführt werden. Es zeigen:
- Figur 1:: eine perspektivische Seitenansicht eines erfindungsgemäßen Bodenreinigungsgerätes;
- Figur 2:: ein Blockdiagramm des Bodenreinigungsgerätes aus Figur 1;
- Figur 3:: ein erfindungsgemäßes Bodenreinigungssystem, umfassend das Bodenreinigungsgerät aus Figur 1;
- Figur 4:: ein weiteres erfindungsgemäßes Bodenreinigungssystem; und
- Figur 5:: einen Ablauf eines bevorzugten Ausführungsbeispiels des erfindungsgemäßen Verfahrens.

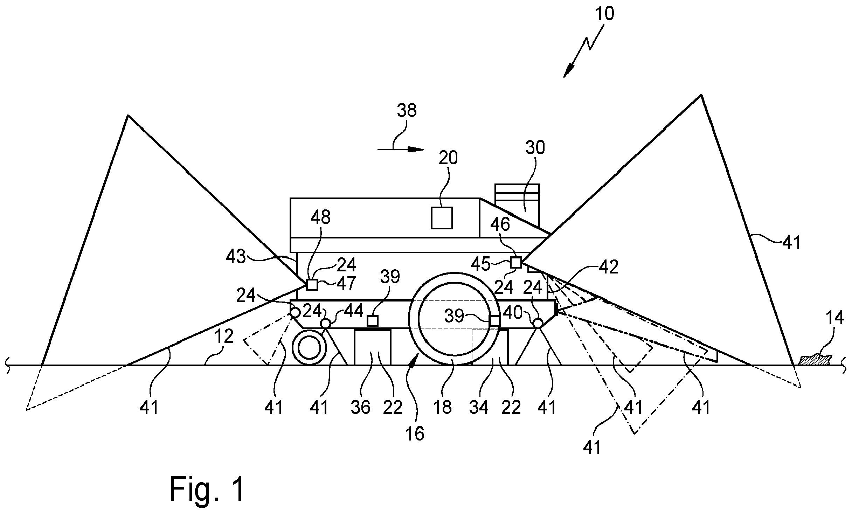

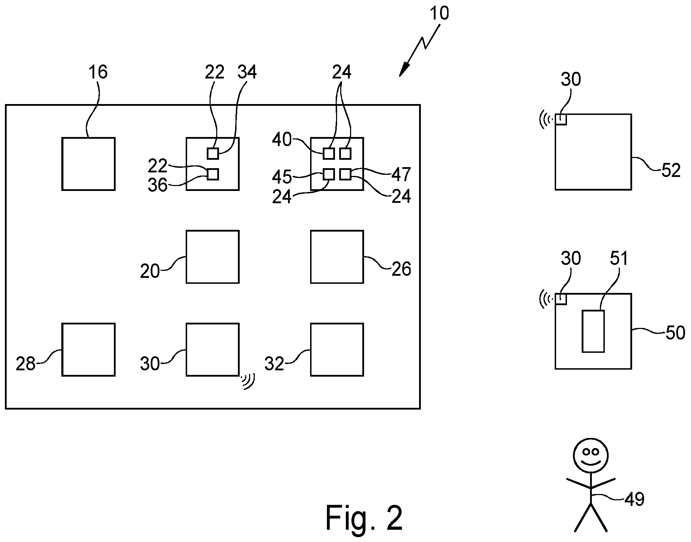

Die Figuren 1 und 2 zeigen eine insgesamt mit dem Bezugszeichen 10 belegte vorteilhafte Ausführungsform eines erfindungsgemäßen Bodenreinigungsgerätes. Das Bodenreinigungsgerät 10 ist selbstfahrend und selbstlenkend ausgestaltet und in der Lage, autonom eine Bodenfläche 12 zu reinigen.

An und insbesondere auf der Bodenfläche 12 können Verschmutzungen verschiedener Art vorhanden sein. Figur 1 zeigt schematisch eine mit dem Bezugszeichen 14 bezeichnete Verschmutzung.

Zum Verfahren auf der Bodenfläche 12 umfasst das Bodenreinigungsgerät 10 ein Fahrwerk 16 mit mindestens einem über einen Antriebsmotor antreibbaren Antriebsrad 18.

Das Bodenreinigungsgerät 10 umfasst eine Steuereinrichtung 20, um dessen Betrieb zu steuern.

Das Bodenreinigungsgerät 10 umfasst ferner mindestens ein Reinigungswerkzeug 22, eine Sensoreinrichtung 24, eine Speichereinrichtung 26, eine Lokalisierungseinrichtung 28, eine Kommunikationseinrichtung 30 und beispielsweise eine Anzeigeeinrichtung 32. Die vorstehend genannten Einrichtungen 20 sowie 24 bis 32 können ineinander integriert oder voneinander umfasst sein.

Das Bodenreinigungsgerät 10 kann mehr als ein Reinigungswerkzeug 22 umfassen. Im vorliegenden Fall wird bespielhaft angenommen, dass Bodenreinigungsgerät 10 zwei Reinigungswerkzeuge 22 umfasst, nämlich eine Kehr-Saug-Einheit 34 und eine Wischeinheit 36. Bezogen auf eine Hauptbewegungsrichtung 38 des Bodenreinigungsgeräts 10 ist die Kehr-Saug-Einheit 34 vor der Wischeinheit 36 angeordnet.

Denkbar ist, dass der Kehr-Saug-Einheit 34 und/oder der Wischeinheit 36 eine Verstelleinheit 39 zugeordnet ist, um diese wahlweise abgesenkt in Eingriff mit der Bodenfläche 12 zu bringen oder anzuheben und außer Eingriff mit der Bodenfläche 12 zu bringen.

Vorliegend umfasst das Bodenreinigungsgerät 10 vorzugsweise eine Mehrzahl von Sensoreinrichtungen 24. Insbesondere ist eine optische spektroskopische Einrichtung 40 zur spektroskopischen Untersuchung der Bodenfläche 12 vorgesehen. Ein Erfassungsbereich 41 ist auf die Bodenfläche 12 gerichtet. Die Einrichtung 40 ist vorliegend bezogen auf die Hauptbewegungsrichtung 38 an oder nahe einer Vorderseite 42 angeordnet. Der Erfassungsbereich 41 kann in der Hauptbewegungsrichtung 38 vorausschauend ausgerichtet sein und/oder auf einen unterhalb des Bodenreinigungsgerätes 10 angeordneten Abschnitt der Bodenfläche 12.

An oder nahe einer in der Hauptbewegungsrichtung 38 angeordneten Rückseite 43 ist eine weitere optische spektroskopische Einrichtung 44 angeordnet, wobei der Erfassungsbereich 41 bezogen auf die Hauptbewegungsrichtung 38 hinter das Bodenreinigungsgerät 10 und/oder unter das Bodenreinigungsgerät 10 gerichtet ist.

Als weitere Sensoreinrichtung 24 ist eine Kameraeinrichtung 45 mit mindestens einer Kamera 46 vorgesehen. Die Kamera 46 ist vorliegend an oder nahe der Vorderseite 42 mit nach vorne gerichtetem Erfassungsbereich 41 angeordnet. In entsprechender Weise kann eine weitere Sensoreinrichtung in Form einer Kameraeinrichtung 47 an oder nahe der Rückseite 43 mit nach hinten gerichteter Kamera 48 vorgesehen sein.

Figur 1 zeigt schematisch die Erfassungsbereiche 41 weiterer Sensoreinrichtungen 24 zum Erfassen der Bodenfläche 12 und insbesondere etwaiger Verschmutzungen 14.

Im Betrieb des Bodenreinigungsgerätes 10 kann ein Abschnitt der Bodenfläche 12 mit mindestens einer Sensoreinrichtung 24 erfasst und der Steuereinrichtung 20 ein diesbezügliches Signal bereitgestellt werden. Die Steuereinrichtung 20 ist ausgebildet und eingerichtet, anhand des Signals die Verschmutzung 14 zu ermitteln. Darüber hinaus kann die Verschmutzung 14 anhand mindestens eines Kriteriums klassifiziert werden. Anhand der Klassifikation der Verschmutzung 14 ist ein Reinigungsverhalten des Bodenreinigungsgerätes 10 für die Bodenfläche 12 überprüfbar und/oder anpassbar.

Insbesondere kann vorgesehen sein, dass das Kriterium die Größe der Verschmutzung 14, einen Grad der Verschmutzung 14 der Bodenfläche 12, die Art der Verschmutzung 14, eine Position der Verschmutzung 14 auf der Bodenfläche und/oder einen Aggregatszustand der Verschmutzung 14 umfasst.

Bei der Art der Verschmutzung 14 kann insbesondere unter Einsatz der spektroskopischen Einrichtungen 40 und/oder 44 festgestellt werden, welches Material die Verschmutzung 14 umfasst oder aus welchem Material diese besteht. Die Größe der Verschmutzung 14 kann beispielsweise mittels der Kameraeinrichtungen 45 und/oder 47 festgestellt werden.

In der Speichereinrichtung 26 können Referenzinformationen gespeichert sein, die von der Steuereinrichtung 20 zum Klassifizieren der Verschmutzung 14 herangezogen werden können. Insbesondere können hierbei Referenzinformationen gespeichert sein, anhand derer das Material der Verschmutzung 14 festgestellt werden kann.

Die Überprüfung und/oder Anpassung des Reinigungsverhaltens kann beispielsweise eine Anpassung eines Fahrverhaltens des Bodenreinigungsgerätes 10, eine Anpassung eines Einsatzes eines Reinigungswerkzeugs 22 und/oder eine Anpassung mindestens eines Reinigungsparameters umfassen.

Insbesondere kann die Anpassung des Reinigungsverhaltens abhängig von mindestens einem vorhandenen Reinigungswerkzeug 22 durchgeführt werden.

Stellt die Steuereinrichtung 20 anhand der Klassifikation beispielsweise fest, dass die Verschmutzung 14 mit einem vorhandenen Reinigungswerkzeug 22 aufgrund von dessen Beschaffenheit nicht entfernt werden kann, kann die Verschmutzung 14 als nicht reinigbar angesehen werden und eine diesbezügliche Information gespeichert werden.

Als nicht reinigbar kann eine Verschmutzung 14 beispielsweise dann angesehen werden, wenn sie von der Steuereinrichtung 20 basierend auf der Klassifikation als nicht überfahrbar angesehen wird. Dies ist zum Beispiel dann der Fall, wenn die Verschmutzung 14 eine Beschaffenheit aufweist, bei der ein Überfahren mit Nachteilen behaftet ist.

Zum Beispiel können Verschmutzungen 14 als nicht reinigbar angesehen werden, die so groß sind, dass sie nicht überfahren werden können. Auch Verschmutzungen 14, die beim Überfahren auf der Bodenfläche 12 räumlich verteilt werden oder auf der Bodenfläche 12 festgefahren werden, können zum Beispiel als nicht reinigbar angesehen werden.

Eine Anpassung des Reinigungsverhaltens durch die Steuereinrichtung 20 kann zum Beispiel das Umfahren der Verschmutzung 14 und/oder ein Vermeiden des Überfahrens der Verschmutzung 14 umfassen. Dies gilt zum Beispiel für die zuletzt erläuterten Fälle bei zu großer Verschmutzung 14 oder bei einer Verschmutzung 14, die räumlich verteilt oder festgefahren werden könnte oder aus anderem Grund nicht reinigbar ist.

Weist zum Beispiel das Bodenreinigungsgerät 10 nur eine Trockenreinigungseinheit als Reinigungswerkzeug 22 auf und ist die Verschmutzung 14 flüssig, wird diese zum Beispiel umfahren oder nicht überfahren.

Umfasst das Bodenreinigungsgerät 10 demgegenüber eine Wischeinheit 36, kann auch eine flüssige Verschmutzung 14 gereinigt werden mit dem Ziel, diese zu entfernen. In diesem Sinne kann das Reinigungsverhalten des Bodenreinigungsgerätes 10 abhängig von dem Reinigungswerkzeug 22 anpassbar sein, unter Berücksichtigung der Klassifikation der Verschmutzung 14.

Die Anpassung des Reinigungsverhaltens kann beispielsweise ein Überfahren und Reinigen der Verschmutzung 14 derart umfassen, dass mit einem vorgegebenen Reinigungswerkzeug 22 über die Verschmutzung 14 verfahren wird, welches zum Entfernen der Verschmutzung 14 ausgebildet ist, wenn das Bodenreinigungsgerät 10 zwei oder mehr Reinigungswerkzeuge 22 umfasst.

Im vorangegangenen Beispiel mit flüssiger Verschmutzung 14 kann beispielsweise vorgesehen sein, dass die Steuereinrichtung 20 das Fahrwerk 16 derart ansteuert, dass die Verschmutzung 14 mit der Wischeinheit 36 für die Feuchtreinigung führend überfahren wird, um diese von der Bodenfläche 12 zu entfernen. Demgegenüber wird vermieden, die Verschmutzung 14 mit der Kehr-Saug-Einheit 34 führend zu überfahren.

Mittels der Verstelleinheiten 39 kann alternativ oder ergänzend das passende Reinigungswerkzeug bedarfsabhängig in Eingriff mit der Bodenfläche 12 gebracht werden, also bei flüssiger Verschmutzung 14 die Wischeinheit 36, wohingegen die Kehr-Saug-Einheit 34 angehoben werden kann.

Vorteilhaft ist es, wenn eine mögliche Verschmutzung 14 vor der Reinigung der Bodenfläche 12 erfassbar ist, insbesondere vor dem Überfahren, wobei die Überprüfung und/oder Anpassung des Reinigungsverhaltens vor der Reinigung durchführbar ist. Insbesondere kann dies dahingehend verstanden werden, dass die Bodenfläche 12 während des Reinigungsbetriebs fortlaufend auf Vorhandensein etwaiger Verschmutzungen 14 überprüft wird. Vor der Reinigung eines die Verschmutzung 14 aufweisenden Abschnittes kann diese erfasst werden. Erforderlichenfalls wird eine Überprüfung und/oder Anpassung des Reinigungsverhaltens durchgeführt.

Auf Funktionseinrichtungen des Bodenreinigungsgerätes 10 wurde bereits eingegangen.

Unter den Funktionseinrichtungen ist für die Speichereinrichtung 26 vorgesehen, in der vorzugsweise eine Karte der Umgebung des Bodenreinigungsgerätes 10 gespeichert ist. Mittels der Lokalisierungseinrichtung 20 kann das Bodenreinigungsgerät 10 innerhalb seiner Umgebung navigieren und dabei die Position ermitteln. Die Position in der Umgebung kann in einer dem Fachmann geläufigen Weise einer Position innerhalb der Karte zugeordnet werden. Umgekehrt besteht die Möglichkeit, Positionen innerhalb der Karte Positionen in der physischen Umgebung des Bodenreinigungsgerätes 10 zuzuordnen.

In der Karte können Verschmutzungen 14 gespeichert sein, insbesondere mit einer Positionsinformation. Dies erlaubt es dem Bodenreinigungsgerät 10, in seiner Umgebung eine in der Karte gespeicherte Verschmutzung 14 aufzufinden und zu identifizieren.

Einträge für Verschmutzungen 14 in der Karte können insbesondere von einer vorangehenden Untersuchung der Bodenfläche 12 stammen, beispielsweise von einem vorangehenden Reinigungsauftrag. Alternativ oder ergänzend ist denkbar, dass ein Eintrag über eine Verschmutzung 14 durch einen Benutzer 49 erfolgt ist.

Die in der Karte gespeicherte Verschmutzung 14 kann mit einer Information über ein geeignetes Reinigungswerkzeug 22 verknüpft sein, mit dem die Verschmutzung 14 entfernt werden kann.

Im Betrieb des Bodenreinigungsgerätes 10 kann eine gespeicherte Verschmutzung 14 vorzugsweise gezielt angefahren und entfernt werden. In diesem Fall kann der Eintrag der Verschmutzung 14 aus der Karte entfernt (gelöscht) werden, wenn eine erfolgreiche Reinigung durchgeführt wurde.

Beispielsweise kann ein Eintrag der Verschmutzung 14 aus der Karte entfernt werden, wenn die Verschmutzung 14 an der in der Karte gespeicherten Position in der Umgebung des Bodenreinigungsgerätes 10 nicht aufgefunden werden kann.

Über die Kommunikationseinrichtung 30 kann das Bodenreinigungsgerät 10 bevorzugt bidirektional mit externen Empfängern kommunizieren, die ihrerseits eine Kommunikationseinrichtung 30 umfassen oder ausbilden. Die Kommunikation kann insbesondere kabellos erfolgen.

Denkbar ist beispielsweise, dass eine Kommunikation zu einer räumlich entfernt vom Bodenreinigungsgerät 10 angeordneten Datenverarbeitungseinrichtung 50 erfolgt, auf die der Benutzer 49 Zugriff hat. Die Datenverarbeitungseinrichtung 50 kann zum Beispiel ein portables Gerät sein. Alternativ oder ergänzend kann ein Server oder ein Rechnernetzwerk (beispielsweise eine Cloud) vorgesehen sein. Die Datenverarbeitungseinrichtung 50 kann zum Beispiel eine Anzeigeeinrichtung 51 umfassen.

Alternativ oder ergänzend kann über die Kommunikationseinrichtung 30 vom Bodenreinigungsgerät 10 zum Beispiel eine Kommunikation zu einem räumlich entfernt angeordneten weiteren Bodenreinigungsgerät 52 aufgebaut werden, dass seinerseits zur Reinigung der Bodenfläche 12 ausgebildet ist.

Denkbar ist zum Beispiel, dass das weitere Bodenreinigungsgerät 52 ein zum Reinigungswerkzeug 22 verschiedenartiges Reinigungswerkzeug aufweist.

Bei einer bevorzugten Ausführungsform des Bodenreinigungsgerätes 10 und des Verfahrens wird beispielsweise die Verschmutzung 14 vor der Reinigung des die Verschmutzung 14 aufweisenden Bodenflächenabschnittes erfasst, vorzugsweise mit mindestens einer Sensoreinrichtung 24 an oder nahe der Vorderseite 42. Nach dem Überfahren und Reinigen kann zum Beispiel mit mindestens einer Sensoreinrichtung 24 an der Rückseite 43 das Reinigungsergebnis kontrolliert und die Bodenfläche 12 auf Entfernung der Verschmutzung 14 überprüft. Alternativ kann das Bodenreinigungsgerät 10 wenden und das Reinigungsergebnis mit der an oder nahe der Vorderseite 42 angeordneten Sensoreinrichtung 24 überprüfen.

Bei negativer Überprüfung, beispielsweise bei weiterhin vorhandener Verschmutzung 14 oder nicht hinreichender Entfernung, kann bevorzugt eine erneute Reinigung der Bodenfläche 12 zum Entfernen der Verschmutzung 14 durchgeführt werden. Vorgesehen sein kann hierbei, dass die Reinigungsleistung mindestens eines Reinigungswerkzeugs 22 gesteigert ist, beispielsweise unter Ansteuerung durch die Steuereinrichtung 20, und/oder dass mindestens ein Reinigungsparameter angepasst wird, um das Reinigungsergebnis zu verbessern.

Nach einer vorgegebenen oder vorgebbaren Anzahl erfolgloser Versuche, die Verschmutzung 14 zu entfernen, kann diese von der Steuereinrichtung 20 als nicht entfernbar klassifizierbar sein. Vorzugsweise wird zumindest eines der Folgenden durchgeführt:
- Eine Mitteilung wird vom Bodenreinigungsgerät 10 an das weitere Bodenreinigungsgerät 52 übermittelt, das insbesondere autonom ausgebildet sein kann. Das Bodenreinigungsgerät 52 kann die Verschmutzung 14 mit dem Ziel aufsuchen, diese zu entfernen, unter Einsatz des andersartigen Reinigungswerkzeugs 22.
- Eine Mitteilung kann vom Bodenreinigungsgerät 10 an die Datenverarbeitungseinrichtung 50 übermittelt werden, um den Benutzer 49 beispielsweise an der Anzeigeeinrichtung 51 über die nicht entfernbare Verschmutzung 14 zu informieren.
- Ein Eintrag für die Verschmutzung 14 kann in der Karte verbunden mit einer Positionsinformation gespeichert werden, wobei die Verschmutzung 14 als nicht entfernbar gespeichert wird.

In ähnlicher Weise kann bei als nicht reinigbar angesehenen Verschmutzungen 14 vorgesehen sein, beispielsweise aufgrund eines ungeeigneten Reinigungswerkzeugs 22 und/oder aufgrund der Größe der Verschmutzung 14, dass zumindest eines der Folgenden durchgeführt wird:
- Übermitteln einer diesbezüglichen Mitteilung vom Bodenreinigungsgerät 10 an das Bodenreinigungsgerät 52;
- Speichern der Verschmutzung 14 in der Karte, verbunden mit einer Positionsinformation und vorzugsweise mit einer Information über ein geeignetes Reinigungswerkzeug 22, mit dem die Verschmutzung 14 gereinigt und vorzugsweise entfernt werden kann;
- Übermitteln einer diesbezüglichen Mitteilung vom Bodenreinigungsgerät 10 an die Datenverarbeitungseinrichtung 50 zur Information des Benutzers 49;
- Bereitstellen eines Hinweises an einen Benutzer 49, ein geeignetes Reinigungswerkzeug 22 einzusetzen, wobei der Hinweis zum Beispiel an der Anzeigeeinrichtung 32 des Bodenreinigungsgerätes 10 selbst dargestellt werden kann;
- Bewegen des Bodenreinigungsgerätes 10 zu einer Station, wie nachfolgend erläutert.

Bei einer in der Karte als nicht reinigbar oder nicht entfernbar gespeicherten Verschmutzung 14 und/oder bei gespeicherter Verschmutzung 14 verknüpft mit einer Information über ein geeignetes Reinigungswerkzeug 22, das sich vom Reinigungswerkzeug 22 des Bodenreinigungsgerätes 10 unterscheidet, kann insbesondere vorgesehen sein, dass Versuch zur Reinigung der Bodenfläche 12 zum Entfernen der Verschmutzung 14 unterbleiben. Dies ist insbesondere auch bei aufeinanderfolgenden Reinigungsaufträgen möglich. Beispielsweise werden nicht reinigbare oder nicht entfernbare Verschmutzungen 14 ignoriert und insbesondere vom Bodenreinigungsgerät 10 umfahren.

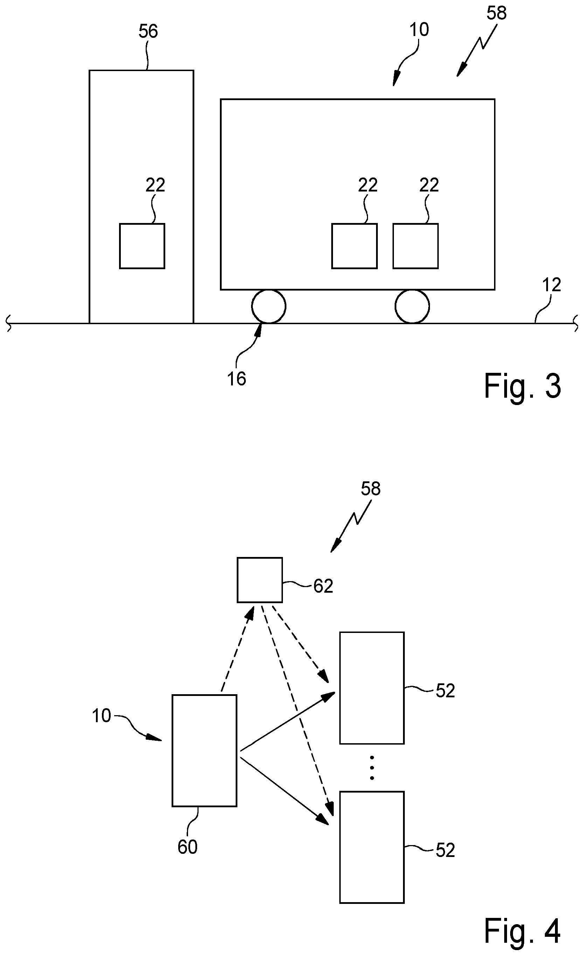

Figur 3 zeigt eine mit dem Bezugszeichen 54 belegte bevorzugte Ausführungsform eines erfindungsgemäßen Bodenreinigungssystem. Das Bodenreinigungssystem 54 umfasst ein erfindungsgemäßes Bodenreinigungsgerät, zum Beispiel das Bodenreinigungsgerät 10, und eine Station 56 für dieses.

Die Station 56 kann vom Bodenreinigungsgerät 10 selbsttätig angefahren werden. An der Station 56 ist mindestens ein Reinigungswerkzeug 22 bevorratet, das sich von den Reinigungswerkzeugen 22 des Bodenreinigungsgerätes 10 unterscheidet.

Wird abhängig von der Klassifikation festgestellt, dass die Verschmutzung 14 mit dem mitgeführten Reinigungswerkzeug 22 nicht reinigbar ist, oder erweist sich die Verschmutzung 14 als nicht entfernbar, kann das Bodenreinigungsgerät 10 an der Station 56 ein geeignetes Reinigungswerkzeug 22 aufnehmen. Mit dem geeigneten Reinigungswerkzeug 22 kann die Verschmutzung 14 aufgesucht und gereinigt werden mit dem Ziel, diese zu entfernen.

Die Reinigungswerkzeuge 22 sind zu diesem Zweck lösbar am Bodenreinigungsgerät 10 festlegbar.

Im vorliegenden Ausführungsbeispiel erfolgt der Tausch der Reinigungswerkzeuge 22 automatisch an der Station. Wie bereits erwähnt kann alternativ oder ergänzend vorgesehen sein, dass die Reinigungswerkzeuge 22 durch einen Benutzer getauscht werden. Von Vorteil ist hierbei ein manueller und/oder werkzeugloser Wechsel der Reinigungswerkzeuge 22.

Figur 4 zeigt in schematischer Darstellung ein mit dem Bezugszeichen 58 belegtes erfindungsgemäßes Bodenreinigungssystem in bevorzugter Ausführungsform.

Das Bodenreinigungssystem 58 umfasst ein selbstfahrendes und selbstlenkendes Untersuchungsgerät 60, bei dem es sich vorzugsweise um ein Bodenreinigungsgerät handelt, beispielsweise das Bodenreinigungsgerät 10.

Hiervon abweichend kann das Untersuchungsgerät 60 wie vorstehend erläutert ausgebildet sein. Hierbei kann ein Untersuchungsgerät 60 zum Einsatz kommen, das seinerseits kein Reinigungswerkzeug 22 umfasst. Die Aufgabe des Untersuchungsgerätes 60 kann darauf beschränkt sein, die Bodenfläche 12 auf Verschmutzungen 14 zu untersuchen und diesbezügliche Reinigungsaufträge den Bodenreinigungsgeräten 52 zuzuweisen.

Ferner umfasst das Bodenreinigungssystem 58 vorliegend mindestens ein weiteres Bodenreinigungsgerät, von denen beispielshaft zwei Bodenreinigungsgeräte 52 dargestellt sind.

Mit dem Untersuchungsgerät 60 kann die Verschmutzung 14 erfasst und anhand der Steuereinrichtung 20 auf der Grundlage mindestens eines Kriteriums klassifiziert werden. An mindestens ein weiteres Bodenreinigungsgerät 52 kann ein Reinigungsauftrag übermittelt werden. Die Übermittlung erfolgt über die Kommunikationseinrichtungen 30 und kann direkt erfolgen, zum Beispiel von Gerät zu Gerät.

Alternativ oder ergänzend kann eine indirekte Übermittlung über eine Datenverarbeitungseinrichtung 62 erfolgen. Denkbar ist, dass in der Datenverarbeitungseinrichtung 62 eine Verwaltung übermittelter und zugewiesener Reinigungsaufträge vorgenommen wird.

Das weitere Bodenreinigungsgerät 52 kann die Verschmutzung 14 mit dem Reinigungsauftrag aufsuchen, um diese nach Möglichkeit zu entfernen. Vorgesehen sein kann, dass ein Reinigungsverhalten des Bodenreinigungsgerätes 52 anhand der Klassifikation der Verschmutzung 14 überprüfbar und/oder anpassbar ist.

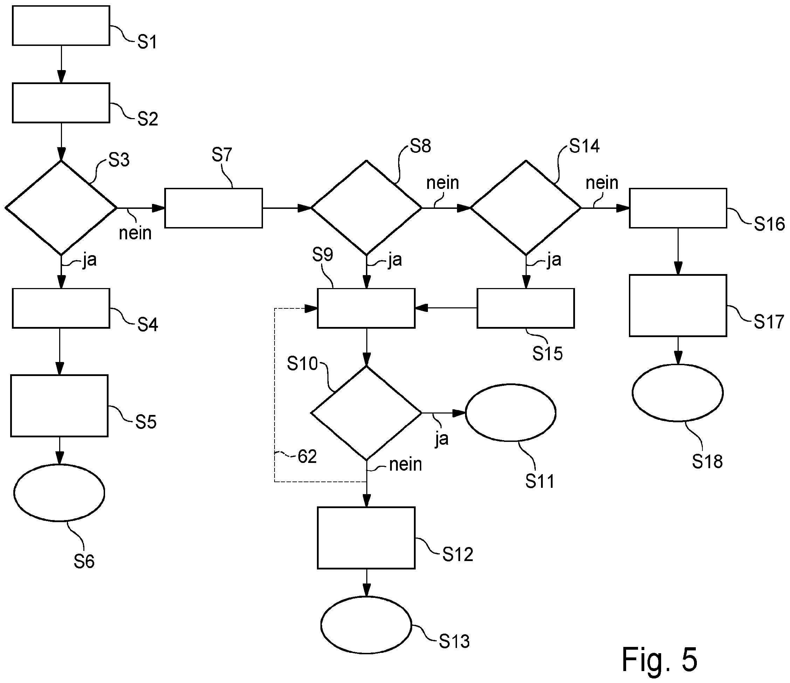

Nachfolgend wird unter Verweis auf Figur 5 ein bevorzugtes Ausführungsbeispiel des erfindungsgemäßen Verfahrens erläutert, das mit dem erfindungsgemäßen Bodenreinigungsgerät 10 ausgeführt werden kann.

Zunächst wird im Schritt S1 eine Verschmutzung 14 auf der Bodenfläche 12 erkannt, deren Größe in einem nachfolgenden Schritt S2 anhand des Signals der Sensoreinrichtung 24 ermittelt wird.

In einem nachfolgenden Schritt S3 wird geprüft, ob die Verschmutzung 14 zu groß für die Reinigung ist und beispielsweise nicht überfahren werden kann. Ist dies der Fall, wird die Verschmutzung 14 (Schritt S4) nicht überfahren oder umfahren. Anschließend wird die Verschmutzung 14 im Schritt S5 in der Karte als "nicht reinigbar" gekennzeichnet, insbesondere als "nicht überfahrbar", weil sie zu groß ist. Schließlich kann in einem Schritt S6 ein Benutzer hierüber informiert werden, wie vorstehend beschrieben.

Wird im Schritt S3 festgestellt, dass die Verschmutzung 14 aufgrund ihrer Größe in der Tat reinigbar ist, kann deren Art, insbesondere deren Material, in einem nachfolgenden Schritt S7 bestimmt werden.

In einem Folgeschritt S8 wird festgestellt, ob die Verschmutzung 14 mit einem vom Bodenreinigungsgerät 10 umfassten Reinigungswerkzeug 22 gereinigt werden kann. Bejahendenfalls wird im Schritt S9 eine Reinigung vorgenommen und anschließend im Schritt S10 geprüft, ob die Verschmutzung entfernt wurde.

Trifft dies zu, ist die Reinigung abgeschlossen, zumindest an diesem Bodenflächenabschnitt (S11). Erforderlichenfalls kann eine diesbezügliche Speicherung und/oder ein Hinweis an den Benutzer vorgenommen werden.

Wenn im Schritt S10 festgestellt wird, dass die Verschmutzung nicht entfernt wurde, kann (Schleife 64) mindestens ein weiterer Reinigungsversuch mit dem Schritt S9 und der Prüfung S10 vorgenommen werden, bei Bedarf mehrere Reinigungsversuche.

Nach einer vorgegebenen oder vorgebbaren Anzahl erfolgloser Versuche wird die Verschmutzung 14 im Schritt S12 als "nicht entfernbar" gekennzeichnet und zum Beispiel entsprechend in der Karte gespeichert. In einem Folgeschritt S13 kann zum Beispiel hinterlegt werden, dass künftig kein weiterer Reinigungsversuch zum Entfernen der Verschmutzung 14 vorgenommen wird. Der Benutzer kann hierüber informiert werden.

Ist das Reinigungswerkzeug 22 im Schritt S8 nicht zur Reinigung der Verschmutzung 14 geeignet, kann im Schritt S14 eine Überprüfung vorgenommen werden, ob ein andersartiges, vom Bodenreinigungsgerät 10 mitgeführtes Reinigungswerkzeug 22 für die Reinigung geeignet ist und dieses für die Reinigung eingesetzt werden. Alternativ kann das Bodenreinigungsgerät 10 von der Station 56 ein andersartiges Reinigungswerkzeug 22 holen, das für die Reinigung geeignet ist, oder einen Tausch des Reinigungswerkzeug 22 durch eine Bedienperson veranlassen. Alternativ kann ein weiteres Bodenreinigungsgerät 52 eingesetzt werden, dessen Reinigungswerkzeug 22 für die Reinigung geeignet ist.

Besteht zumindest eine der drei vorstehend genannten Möglichkeiten, kann das geeignete Bodenreinigungsgerät 10, 52 oder dessen Reinigungswerkzeug 22 (Schritt S15) an den Ort der Verschmutzung 14 gebracht oder das Reinigungswerkzeug 22 in Eingriff mit der Bodenfläche 12 gebracht werden. Das Verfahren wird mit dem Schritt S9 fortgesetzt.

Besteht im Schritt S14 keine Möglichkeit für den Einsatz eines geeigneten Reinigungswerkzeuges, wird die Verschmutzung 14 im Schritt S16 nicht überfahren oder umfahren. In einem Schritt S17 wird die Verschmutzung 14 als "nicht reinigbar" aufgrund ihrer Beschaffenheit gekennzeichnet, insbesondere aufgrund der Schmutzart. In der Karte kann ein diesbezüglicher Hinweis gespeichert sein. In einem Folgeschritt S18 kann zum Beispiel eine Bedienperson hierüber informiert werden, zum Beispiel für den Einsatz eines Reinigungsgerätes mit geeignetem Reinigungswerkzeug oder für den Tausch des Reinigungswerkzeugs 22.

### Bezugszeichenliste

- 10: Bodenreinigungsgerät
- 12: Bodenfläche
- 14: Verschmutzung
- 16: Fahrwerk
- 18: Antriebsrad
- 20: Steuereinrichtung
- 22: Reinigungswerkzeug
- 24: Sensoreinrichtung
- 26: Speichereinrichtung
- 28: Lokalisierungseinrichtung
- 30: Kommunikationseinrichtung
- 32: Anzeigeeinrichtung
- 34: Kehr-Saug-Einheit
- 36: Wischeinheit
- 38: Hauptbewegungsrichtung
- 39: Verstelleinheit
- 40, 44: optische spektroskopische Einrichtung
- 41: Erfassungsbereich
- 42: Vorderseite
- 43: Rückseite
- 45, 47: Kameraeinrichtung
- 46, 48: Kamera
- 49: Benutzer
- 50: Datenverarbeitungseinrichtung
- 51: Anzeigeeinrichtung
- 52: weiteres Bodenreinigungsgerät
- 54, 58: Bodenreinigungssystem
- 56: Station
- 60: Untersuchungsgerät
- 62: Datenverarbeitungseinrichtung
- 64: Schleife

## Patentansprüche

1. Selbstfahrendes und selbstlenkendes Bodenreinigungsgerät (10), umfassend ein Fahrwerk (16) zum Verfahren auf der Bodenfläche (12), mindestens ein Reinigungswerkzeug (22) zum Reinigen der Bodenfläche (12), eine Steuereinrichtung (20) und mindestens eine Sensoreinrichtung (24) mit einem auf die Bodenfläche (12) gerichteten Erfassungsbereich (41), wobei von der Steuereinrichtung (20) anhand eines Signals der mindestens einen Sensoreinrichtung (24) eine Verschmutzung (14) der Bodenfläche (12) und insbesondere auf der Bodenfläche (12) feststellbar ist, die Verschmutzung (14) anhand mindestens eines Kriteriums klassifizierbar ist und ein Reinigungsverhalten für die Bodenfläche (12) anhand der Klassifikation der mindestens einen Verschmutzung (14) überprüfbar und/oder anpassbar ist.

2. Bodenreinigungsgerät nach Anspruch 1, **dadurch gekennzeichnet, dass** das Kriterium zumindest eines der Folgenden umfasst:
- eine Größe der Verschmutzung (14);
- einen Grad der Verschmutzung (14) der Bodenfläche (12);
- eine Art der Verschmutzung (14), wobei zumindest ein Material der Verschmutzung (14) ermittelbar ist;
- eine Position der Verschmutzung (14);
- einen Aggregatzustand der Verschmutzung (14).

3. Bodenreinigungsgerät nach Anspruch 1 oder 2, **dadurch gekennzeichnet, dass** die Anpassung des Reinigungsverhaltens durch die Steuereinrichtung (20) eine Anpassung eines Fahrverhaltens des Bodenreinigungsgerätes (10), eine Anpassung des Einsatzes mindestens eines Reinigungswerkzeugs (22) und/oder die Anpassung mindestens eines Reinigungsparameters umfasst und/oder dass die Anpassung des Reinigungsverhaltens durch die Steuereinrichtung (20) in Abhängigkeit des mindestens einen Reinigungswerkzeugs (22) durchführbar ist.

4. Bodenreinigungsgerät nach einem der voranstehenden Ansprüche, **dadurch gekennzeichnet, dass** die mindestens eine Sensoreinrichtung (20) zumindest eines der Folgenden ist oder umfasst:
- eine optische spektroskopische Einrichtung (40);
- eine Kameraeinrichtung (45, 47) mit mindestens einer Kamera (46, 48);
- eine Abstandsmesseinrichtung, beispielsweise umfassend eine TOF-Kamera;
- eine Einrichtung zum räumlichen Abtasten der Bodenfläche (12), beispielsweise umfassend einen Lidar-Sensor;
- eine Radareinrichtung, beispielsweise ein mm-Wave Radar;
- ein induktiv wirksames Sensorelement mit elektromagnetischem Messprinzip, beispielsweise als Materialsensor.

5. Bodenreinigungsgerät nach einem der voranstehenden Ansprüche, **dadurch gekennzeichnet, dass** das Bodenreinigungsgerät (10) eine Lokalisierungseinrichtung (28) zum Lokalisieren in einer Umgebung umfasst und dass in einer Speichereinrichtung (26) eine Karte der Umgebung gespeichert ist, wobei die Verschmutzung (14) mit Positionsinformation in der Karte speicherbar ist und/oder in der Karte eine zuvor erfasste Verschmutzung (14) mit Positionsinformation gespeichert ist.

6. Bodenreinigungsgerät nach einem der voranstehenden Ansprüche, **dadurch gekennzeichnet, dass** die Verschmutzung (14) vor der Reinigung mit dem Bodenreinigungsgerät (10) erfassbar ist, insbesondere vor Überfahren der Verschmutzung (14) mit dem Bodenreinigungsgerät (10), und dass die Überprüfung und/oder Anpassung des Reinigungsverhaltens vor der Reinigung durchführbar ist.

7. Bodenreinigungsgerät nach einem der voranstehenden Ansprüche, **dadurch gekennzeichnet, dass** die Bodenfläche (12) nach vorhergehender Erfassung der Verschmutzung (14) und nach der Reinigung auf Entfernung der Verschmutzung (14) überprüfbar ist, wobei insbesondere bei negativer Überprüfung mindestens eine erneute Reinigung der Bodenfläche (12) zum Entfernen der Verschmutzung (14) durchführbar ist.

8. Bodenreinigungsgerät nach einem der voranstehenden Ansprüche, **dadurch gekennzeichnet, dass** nach einer vorgegebenen Anzahl erfolgloser Versuche, die Verschmutzung (14) zu entfernen, die Verschmutzung (14) vom Bodenreinigungsgerät (10) als nicht von der Bodenfläche entfernbar klassifizierbar ist und zumindest eines der Folgenden durchführbar ist:
- Übermitteln einer diesbezüglichen Mitteilung vom Bodenreinigungsgerät (10) über eine Kommunikationseinrichtung (30) an ein weiteres autonomes Bodenreinigungsgerät (52), das insbesondere ein andersartiges Reinigungswerkzeug (22) umfasst, mit dem die Verschmutzung (14) entfernbar ist;
- Übermitteln einer diesbezüglichen Mitteilung vom Bodenreinigungsgerät (10) über eine Kommunikationseinrichtung (30) an eine räumlich entfernt angeordnete Datenverarbeitungseinrichtung (50) eines Benutzers (49);
- Speichern der Verschmutzung (14) als nicht entfernbar in der Karte, verbunden mit einer Positionsinformation.

9. Bodenreinigungsgerät nach einem der voranstehenden Ansprüche, **dadurch gekennzeichnet, dass** von der Steuereinrichtung (20) anhand der Klassifikation feststellbar ist, ob die Verschmutzung (14) mit dem mindestens einen Reinigungswerkzeug (22) reinigbar ist, wobei von der Steuereinrichtung (20) insbesondere feststellbar ist, unter Einsatz was für einer Art Reinigungswerkzeug (22) die Verschmutzung (14) entfernbar ist.

10. Bodenreinigungsgerät nach einem der voranstehenden Ansprüche,
**dadurch gekennzeichnet, dass** von der Steuereinrichtung (20) die Verschmutzung (14) als nicht reinigbar angesehen wird, wenn die Verschmutzung (14) von der Steuereinrichtung (20) basierend auf der Klassifikation als nicht überfahrbar angesehen wird.

11. Bodenreinigungsgerät nach Anspruch 9 oder 10, **dadurch gekennzeichnet, dass** bei Feststellung, dass die Verschmutzung (14) nicht reinigbar ist, zumindest eines der Folgenden durchführbar ist:
- Übermitteln einer diesbezüglichen Mitteilung vom Bodenreinigungsgerät (10) über eine Kommunikationseinrichtung (30) an ein weiteres autonomes Bodenreinigungsgerät (52), das insbesondere ein andersartiges Reinigungswerkzeug (22) umfasst, mit dem die Verschmutzung (14) entfernbar ist;
- Speichern der Verschmutzung (14) in der Karte, verbunden mit einer Positionsinformation, vorzugsweise verbunden mit einer Information über ein geeignetes Reinigungswerkzeug (22) zum Entfernen der Verschmutzung (14);
- Übermitteln einer diesbezüglichen Mitteilung vom Bodenreinigungsgerät (10) über eine Kommunikationseinrichtung (30) an eine räumlich entfernt angeordnete Datenverarbeitungseinrichtung (50) eines Benutzers (49);
- Bereitstellen, an einer Anzeigeeinrichtung (32), eines Hinweises an einen Benutzer (49) zum Einsetzen eines geeigneten Reinigungswerkzeugs (22) in das Bodenreinigungsgerät (10);
- Bewegen des Bodenreinigungsgerätes (10) zu einer Station (56), an der mindestens ein Reinigungswerkzeug (22) vom Bodenreinigungsgerät (10) austauschbar oder aufnehmbar ist, unter dessen Einsatz die Verschmutzung (14) entfernbar ist, und Entfernen der Verschmutzung (14).

12. Bodenreinigungsgerät nach einem der voranstehenden Ansprüche, **dadurch gekennzeichnet, dass** mindestens ein Reinigungswerkzeug (22) lösbar festlegbar am Bodenreinigungsgerät (10) gehalten ist und/oder dass das Bodenreinigungsgerät (10) zwei oder mehr voneinander unterschiedliche Reinigungswerkzeuge (22) umfasst, die wahlweise zur Reinigung der Bodenfläche (12) einsetzbar sind.

13. Bodenreinigungsgerät nach einem der voranstehenden Ansprüche, **dadurch gekennzeichnet, dass** bei Erfassen der Verschmutzung (14), die in der Karte als nicht reinigbar oder als nicht entfernbar gespeichert ist, und/oder die verbunden mit einer Information über ein geeignetes Reinigungswerkzeug (22) gespeichert ist, welches sich vom mindestens einen Reinigungswerkzeug (22) des Bodenreinigungsgerätes (10) unterscheidet, ein Versuch der Reinigung der Bodenfläche (12) zum Entfernen der Verschmutzung (14) unterbleibt.

14. Bodenreinigungsgerät nach einem der voranstehenden Ansprüche, **dadurch gekennzeichnet, dass** die Überprüfung und/oder Anpassung des Reinigungsverhaltens eines der Folgenden umfasst:
- ein Umfahren der Verschmutzung (14) und/oder ein Vermeiden des Überfahrens der Verschmutzung (14);
- Überfahren und Reinigen der Verschmutzung (14) führend mit einem vorgegebenen Reinigungswerkzeug (22), wobei das Bodenreinigungsgerät (10) zwei oder mehr Reinigungswerkzeuge (22) umfasst.

15. Bodenreinigungsgerät nach einem der voranstehenden Ansprüche, **dadurch gekennzeichnet, dass** das mindestens eine Reinigungswerkzeug (22) eine Kehreinheit, eine Kehr-Saug-Einheit (34), eine Wischeinheit (36), eine Scheuersaugeinheit und/oder eine Saugeinheit umfasst und/oder dass das mindestens eine Reinigungswerkzeug (22) für zumindest eines der Folgenden ausgebildet ist: Dampfreinigung, Hochdruckreinigung, Reinigung mit Reinigungsstrahl, Trockenmoppen.

16. Bodenreinigungsgerät nach einem der voranstehenden Ansprüche,
**dadurch gekennzeichnet, dass** mindestens eine Sensoreinrichtung (24) an oder nahe einer Vorderseite (42) des Bodenreinigungsgerätes (10) angeordnet ist, bezogen auf dessen Hauptbewegungsrichtung (38), und/oder dass mindestens eine Sensoreinrichtung (24) an oder nahe einer Rückseite (43) des Bodenreinigungsgerätes (10) angeordnet ist, bezogen auf dessen Hauptbewegungsrichtung (38).

17. Bodenreinigungssystem, umfassend mindestens ein Bodenreinigungsgerät (10) nach einem der voranstehenden Ansprüche, eine Station (56) für das Bodenreinigungsgerät (10), und zwei oder mehr verschiedenartige Reinigungswerkzeuge (22), von denen zumindest eines am Bodenreinigungsgerät (10) lösbar festlegbar ist, und wobei das Reinigungswerkzeug (22) vom Bodenreinigungsgerät (10) an der Station (56) selbsttätig aufnehmbar ist, abhängig von einer Klassifikation der Verschmutzung (14).

18. Bodenreinigungssystem, umfassend ein Bodenreinigungssystem (54) nach Anspruch 17 und/oder ein selbstfahrendes und selbstlenkendes Untersuchungsgerät (60), umfassend ein Fahrwerk (16) zum Verfahren auf der Bodenfläche (12), eine Steuereinrichtung (20), eine Kommunikationseinrichtung (30), und mindestens eine Sensoreinrichtung (24) mit einem auf die Bodenfläche (12) gerichteten Erfassungsbereich (41), wobei von der Steuereinrichtung (20) anhand eines Signals der mindestens einen Sensoreinrichtung (24) eine Verschmutzung (14) der Bodenfläche (12) und insbesondere auf der Bodenfläche (12) feststellbar ist und die Verschmutzung (14) anhand mindestens eines Kriteriums klassifizierbar ist, wobei das Bodenreinigungsgerät (10) mindestens ein weiteres selbstfahrendes und selbstlenkendes Bodenreinigungsgerät (52) umfasst, umfassend ein Fahrwerk (16) zum Verfahren auf der Bodenfläche (12), mindestens ein Reinigungswerkzeug (22) zum Reinigen der Bodenfläche (12), eine Steuereinrichtung (20), und eine Kommunikationseinrichtung (30), wobei vom Untersuchungsgerät (60) mindestens einem weiteren Bodenreinigungsgerät (52) über die Kommunikationseinrichtungen (30) direkt oder indirekt ein Reinigungsauftrag mit einer Verschmutzungsinformation über die klassifizierte Verschmutzung (14) übermittelbar ist, wobei vorzugsweise das Untersuchungsgerät (60) und/oder das mindestens eine weitere Bodenreinigungsgerät (52) ein Bodenreinigungsgerät (10) nach einem der Ansprüche 1 bis 16 ist.

19. Verfahren zum Betreiben eines Bodenreinigungsgerätes, insbesondere nach einem der Ansprüche 1 bis 16, umfassend:
- Erfassen, mittels mindestens einer Sensoreinrichtung, einer Verschmutzung einer Bodenfläche;
- Klassifizieren, mittels einer Steuereinrichtung, der Verschmutzung;
und
- Überprüfen und/oder Anpassen, mittels der Steuereinrichtung, eines Reinigungsverhaltens für die Bodenfläche anhand der Klassifikation der mindestens einer Verschmutzung.
